# FASCICULE DE BREVET EUROPEEN

(11) **EP 1 818 197 B1**
(45) Date de publication et mention de la délivrance du brevet: **23.04.2008**
(21) Numéro de dépôt: 07356017.9
(22) Date de dépôt: 13.02.2007
(51) Int. Cl.: B60H 1/24

(54) **Extracteur d'air pour véhicule automobile**
Entlüftungsvorrichtung für ein Kraftfahrzeug
Air extractor for an automobile

(30) Priorité: 14.02.2006 FR 0601272
(43) Date de publication de la demande: 15.08.2007
(73) Titulaire: Fabi Automobile S.A.S, 25500 Morteau (FR)
(72) Inventeur: Bourbon, Claude, 39360 Molinges (FR)
(74) Mandataire: Jeannet, Olivier

(56) Documents cités:
- EP-A- 0 284 353
- EP-A- 1 527 917
- US-A- 5 325 892
- US-A1- 2005 075 064
- US-B1- 6 357 473

## Description

La présente invention concerne un extracteur d'air pour véhicule automobile.

Un extracteur d'air de véhicule automobile a pour fonction de laisser s'échapper de l'air de l'intérieur de l'habitacle du véhicule vers l'extérieur, afin d'éviter toute surpression résultant notamment de la fermeture d'une portière, et ce tout en empêchant, en l'absence d'une telle surpression, l'entrée d'air à l'intérieur du véhicule.

Un extracteur d'air comprend un boîtier, généralement en matière thermoplastique, et un volet souple en caoutchouc ou matière similaire, et est généralement fixé au véhicule, au niveau du pare-chocs arrière.

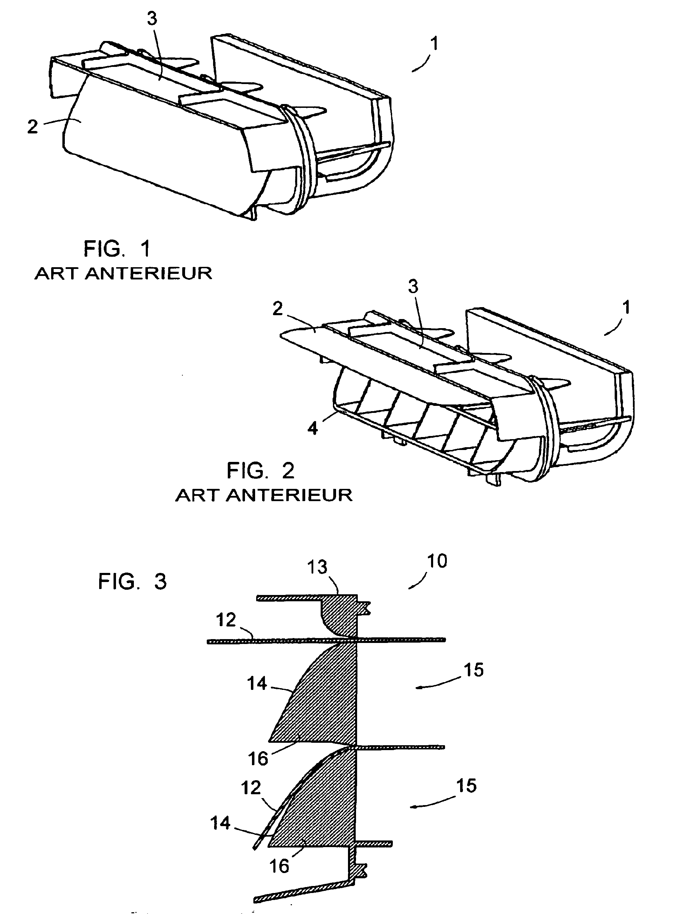

Les figures 1 et 2 montrent, vu en perspective, un extracteur d'air 1 connu, avec le volet 2 respectivement en position normale de fermeture par rapport au boîtier 3, qu'il adopte simplement par gravité, et en position d'ouverture permettant l'échappement d'air, dans laquelle il est momentanément amené en cas de surpression dans l'habitacle.

Un extracteur tel que montré sur ces figures a pour inconvénient de ne pas avoir une étanchéité parfaite entre le volet 2 et le boîtier 3. En effet, certaines zones du volet 2 peuvent ne pas venir précisément en application contre le siège 4. De plus, l'extracteur 1 connu a pour inconvénient de générer des bruits indésirables lorsque le volet 2 retombe sur le siège 4.

La présente invention a pour objectif de remédier à ces inconvénients.

Le document N° US 6,357,473 décrit un extracteur d'air pour véhicule automobile dont le siège est rectiligne dans le plan dans lequel se déplace le volet, c'est-à-dire lorsque l'extracteur est vu latéralement (cf. figures 15 et 16) et est concave dans un plan perpendiculaire à ce plan, c'est-à-dire vu de dessus (cf. figures 2, 4, 6, etc.).

L'extracteur selon ce document ne remédie pas aux inconvénients précités.

L'extracteur d'air concerné par l'invention comprend, de manière connue en soi, un boîtier formant au moins un siège et au moins un volet souple destiné, en position normale, à venir en application contre le siège correspondant.

Selon l'invention, chaque siège a, vu dans le plan dans lequel se déplace le volet correspondant, un profil convexe permettant une application progressive du volet contre ce siège lorsque le volet retombe.

Ce profil convexe permet, par cette application progressive du volet contre le siège lorsque le volet retombe, d'éliminer les bruits indésirables que produit l'extracteur connu. De plus, ce profil convexe s'avère favorable à l'obtention d'une application étroite du volet contre le siège.

La courbure du siège du volet peut être de rayon constant ou de rayon non constant. Notamment, elle peut être de rayon plus réduit du côté de la zone du siège le long de laquelle le volet est relié au boîtier et de rayon allant en augmentant en direction du côté opposé.

L'extracteur selon l'invention peut comprendre un volet unique ou peut comprendre plusieurs volets, notamment deux volets superposés.

L'invention sera bien comprise, et d'autres caractéristiques et avantages de celle-ci apparaîtront, en référence au dessin schématique annexé, représentant, à titre d'exemple non limitatif, une forme de réalisation possible de l'extracteur qu'elle concerne.

La figure 3 en est une vue de côté, en coupe.

Cette figure 3 représente un extracteur d'air 10 pour véhicule automobile, comprenant un boîtier 13, généralement en matière thermoplastique, et deux volets souples 12 en caoutchouc ou matière similaire.

Le boîtier 13 forme deux conduits superposés 15 d'écoulement de l'air, dont chacun est délimité par une paroi périphérique et par des ailettes verticales 16, à l'instar de l'extracteur 1 montré sur les figures 1 et 2. Les bords aval de cette paroi périphérique et de ces ailettes 16 forment un siège 14 de réception du volet 12.

Comme le montre la figure 3, chaque siège 14 a, vu dans le plan dans lequel se déplace le volet 12, un profil convexe. Dans l'exemple représenté, la courbure du siège 14 est de rayon non constant, plus réduit du côté de la zone du siège le long de laquelle le volet 12 est relié au boîtier 13, et allant en augmentant en direction du côté opposé.

Le profil convexe du siège 14 permet une application progressive du volet 12 contre le siège 14 lorsque le volet 12 retombe, éliminant ainsi les bruits indésirables que produit l'extracteur 1 connu. De plus, ce profil convexe s'avère favorable à l'obtention d'une application étroite du volet 12 contre le siège 14, ce qui peut résulter d'une légère mise en tension du volet 12 tant dans une direction parallèle à la zone du volet 12 reliée au boîtier 13 (cette direction correspond généralement à la longueur du volet 12) que dans une direction perpendiculaire à cette zone (généralement la largeur du volet 12).

L'invention fournit ainsi un extracteur d'air pour véhicule automobile présentant les avantages déterminants de ne pas générer de bruits indésirables et d'être parfaitement étanche.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. - Extracteur d'air pour véhicule automobile, comprenant un boîtier (13) formant au moins un siège (14) et au moins un volet souple (12) destiné, en position normale, à venir en application contre le siège (14) correspondant, **caractérisé en ce que** chaque siège (14) a, vu dans le plan dans lequel se déplace le volet correspondant (12), un profil convexe, permettant une application progressive du volet contre ce siège lorsque le volet retombe.

2. - Extracteur d'air selon la revendication 1, **caractérisé en ce que** la courbure du siège (14) est de rayon constant.

3. - Extracteur d'air selon la revendication 1, **caractérisé en ce que** la courbure du siège (14) est de rayon non constant.

4. - Extracteur d'air selon l'une des revendications 1 à 3, **caractérisé en ce que** la courbure du siège (14) est de rayon plus réduit du côté de la zone du siège (14) le long de laquelle le volet (12) est relié au boîtier et de rayon allant en augmentant en direction du côté opposé.

5. - Extracteur d'air selon l'une des revendications 1 à 4, **caractérisé en ce qu**'il comprend un volet (12) unique.

6. - Extracteur d'air selon l'une des revendications 1 à 5, **caractérisé en ce qu**'il comprend plusieurs volets (12), notamment deux volets superposés.

## Claims

1. Air extractor for a motor vehicle, comprising a housing (13) forming at least one seat (14) and at least one flexible flap (12) intended, in the normal position, to be applied against the corresponding seat (14), **characterised in that** each seat (14) has, seen in the plane in which the corresponding flap (12) moves, a convex profile, allowing progressive application of the flap against its seat when the flap falls again.

2. Air extractor according to claim 1, **characterised in that** the curvature of the seat (14) has a constant radius.

3. Air extractor according to claim 1, **characterised in that** the curvature of the seat (14) has a non-constant radius.

4. Air extractor according to one of claims 1 to 3, **characterised in that** the curvature of the seat (14) has a smaller radius on the side of the area of the seat (14) along which the flap (12) is connected to the housing and has a radius that increases in the direction of the opposite side.

5. Air extractor according to one of claims 1 to 4, **characterised in that** it comprises a single flap (12).

6. Air extractor according to one of claims 1 to 5, **characterised in that** it comprises several flaps (12), in particular two superimposed flaps.

## Patentansprüche

1. Luftabscheider für Kraftfahrzeuge, umfassend ein Gehäuse (13), welches mindestens einen Sitz (14) und mindestens eine flexible Klappe (12) bildet, welche in Normalstellung dazu bestimmt ist, auf dem entsprechenden Sitz (14) aufzuliegen, **dadurch gekennzeichnet, dass** jeder Sitz (14), aus der Bewegungsebene der entsprechenden Klappe gesehen ein konvexes Profil aufweist, um bei dem Herunterfallen der Klappe ein allmähliches Auflegen der Klappe auf den Sitz zu erlauben.

2. Luftabscheider nach Anspruch 1, **dadurch gekennzeichnet, dass** die Wölbung des Sitzes (14) einen konstanten Radius aufweist.

3. Luftabscheider nach Anspruch 1, **dadurch gekennzeichnet, dass** die Wölbung des Sitzes (14) einen nicht konstanten Radius aufweist.

4. Luftabscheider nach einem der Ansprüche 1 bis 3, **dadurch gekennzeichnet, dass** die Wölbung des Sitzes (14) auf der Seite des Sitzbereiches (14), entlang welcher die Klappe (12) mit dem Gehäuse verbunden ist, einen kleineren Radius aufweist, und der Radius in die entgegengesetzte Richtung hin zunimmt.

5. Luftabscheider nach einem der Ansprüche 1 bis 4, **dadurch gekennzeichnet, dass** er eine einzige Klappe (12) umfasst.

6. Luftabscheider nach einem der Ansprüche 1 bis 5, **dadurch gekennzeichnet, dass** er mehrere Klappen (12) umfasst, insbesondere zwei übereinanderliegende Klappen.
